# EUROPÄISCHE PATENTSCHRIFT

(11) **EP 3 307 529 B1**
(45) Veröffentlichungstag und Bekanntmachung des Hinweises auf die Patenterteilung: **17.07.2019**
(21) Anmeldenummer: 16727420.8
(22) Anmeldetag: 31.05.2016
(51) Int. Cl.: B29C 73/04, B29C 73/26, B29C 65/72, B29C 65/56, B29C 65/00, B29L 31/00, B29L 31/54, B29L 31/30

(54) **VERFAHREN ZUM AUSTAUSCHEN EINES ABSCHNITTS EINES KUNSTSTOFFBAUTEILS**
METHOD FOR EXCHANGING A SECTION OF A PLASTIC COMPONENT
PROCÉDÉ POUR REMPLACER UNE PARTIE D'UNE PIÈCE EN MATÉRIAU SYNTHÉTIQUE

(30) Priorität: 15.06.2015 DE 102015210869
(43) Veröffentlichungstag der Anmeldung: 18.04.2018
(73) Patentinhaber: Bayerische Motoren Werke Aktiengesellschaft, 80809 München (DE)
(72) Erfinder: HAHN, Wolfgang, 85238 Petershausen (DE); HAMMER, Maik, 84079 Bruckberg (DE); VAN NIEKERK, Johann, 80993 München (DE); STEFANZIOSA, Clemens, 80539 München (DE)
(86) Internationale Anmeldenummer: PCT/EP2016/062217
(87) Internationale Veröffentlichungsnummer: WO 2016/202571

(56) Entgegenhaltungen:
- EP-A1- 2 848 394
- EP-A2- 2 546 149
- US-A- 4 978 404
- US-A- 5 023 987

## Beschreibung

Die vorliegende Erfindung betrifft ein Verfahren zum Austauschen eines Abschnitts eines Kunststoffbauteils gemäß dem Oberbegriff des Patentanspruches 1.

Ein derartiges Verfahren ist aus der DE 10 2013 203 208 A1 bekannt.

Aus der EP 2 546 149 A2 ist ein Verfahren zum Austauschen eines Abschnitts, insbesondere eines beschädigten Abschnitts, eines Kunststoffbauteiles bekannt, bei dem zunächst der betreffende beschädigte Abschnitt aus dem Kunststoffbauteil herausgetrennt wird. Anschließend wird mindestens ein aus einem Kunststoff bestehendes Verbindungselement bereitgestellt und an das Kunststoffbauteil angedrückt, derart, dass das mindestens eine Verbindungselement an einem verbliebenen Teil des Kunststoffbauteils anliegt. Anschließend wird ein den herausgetrennten Abschnitt ersetzender Abschnitt bereitgestellt, wobei der ersetzende Abschnitt ein Durchgangsloch aufweist. Der ersetzende Abschnitt wird in dem Bereich, in dem der herausgetrennte Abschnitt herausgetrennt worden ist, angebracht.

Aufgabe der Erfindung ist es, ein alternatives, einfach durchführbares Verfahren zum Austauchen eines Abschnitts eines Kunststoffbauteils zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zum Austauschen eines Abschnitts, insbesondere eines beschädigten Abschnitts eines Kunststoffbauteils. Bei dem Kunststoffbauteil kann es sich z. B. um ein Karosseriebauteil eines Fahrzeugs handeln, insbesondere um ein faserverstärktes Kunststoffbauteil, wie z. B. um ein kohlefaserverstärktes Kunststoffbauteil und/oder ein Glasfaser oder durch andere Fasern verstärktes Kunststoffbauteil.

In einem ersten Schritt wird der besagte Abschnitt (z. B. beschädigte Abschnitt) aus dem Kunststoffbauteil herausgetrennt. Dabei kann vorgesehen sein, dass das Kunststoffbauteil werksseitig, d. h. bereits im unbeschädigten Zustand vom Hersteller vordefinierte Trennstellen aufweist, an denen es vorzugsweise aufgetrennt wird. Das Auftrennen kann beispielsweise durch Schneiden (z. B. Wasserstrahlschneiden oder Schneiden mittels Hochenergiestrahls (Laserstrahl)) oder in anderer Weise erfolgen.

Nach dem Heraustrennen des Abschnitts aus dem Kunststoffbauteil wird ein ebenfalls aus einem Kunststoffmaterial bestehendes Verbindungselement bereitgestellt und an das erste Bauteil angedrückt. Das Verbindungselement wird also an einen verbliebenen Teil des Kunststoffbauteils angelegt. Anschließend wird es mittels einer Ultraschallsonotrode in Schwingungen versetzt und mit dem verbliebenen Teil des Kunststoffbauteils verschweißt.

Vorzugsweise handelt es sich bei dem Kunststoffbauteil und/oder bei dem Verbindungselemente um ein aus einem thermoplastischen Kunststoff bestehendes Kunststoffbauteil bzw. Verbindungselement. Zumindest sollte das Verbindungselement in dem Bereich, in dem es mit dem Kunststoffbauteil verschweißt wird, aus einem thermoplastischen Kunststoffmaterial bestehen.

Dementsprechend sollte das Kunststoffbauteil zumindest in dem Bereich, in dem es mit dem Verbindungselement verschweißt wird, aus einem thermoplastischen Kunststoffmaterial bestehen. Zum Verschweißen des Verbindungselements mit dem Kunststoffbauteil kann das Verbindungelement mittels der Ultraschallsonotrode in translatorische Schwingungen und/oder in Drehschwingungen versetzt werden, was dazu führt, dass Material des Verbindungselements und/oder Material des Kunststoffbauteils im Berührbereich des Verbindungselements aufschmilzt.

Gemäß der Erfindung wird ein den herausgetrennten Abschnitt ersetzender Abschnitt bereitgestellt, wobei der ersetzende Abschnitt ein Loch, wie z.B. ein Durchgangsloch, aufweist.

Anschließend wird der ersetzende Abschnitt in dem Bereich angebracht, in dem der herausgetrennte Abschnitt herausgetrennt worden ist und zwar derart, dass sich das Verbindungselement zumindest ein Stück weit in das Loch bzw. zumindest ein Stück weit durch das Durchgangsloch hindurcherstreckt.

Der ersetzende Abschnitt kann wahlweise mit seinem Loch bzw. mit seinem Durchgangsloch direkt formschlüssig und/oder kraftschlüssig auf das Verbindungselement aufgeklemmt werden, was voraussetzt, dass der ersetzende Abschnitt im Bereich des Lochs bzw. des Durchgangslochs ein gewisses Untermaß in Bezug auf das Verbindungselement und zumindest eine gewisse Elastizität aufweist, so dass das Loch bzw. Durchgangsloch auf das Verbindungselement aufgeklemmt werden kann.

Alternativ dazu kann vorgesehen sein, dass sich das Verbindungselement zumindest ein Stück weit durch das Durchgangsloch hindurch erstreckt und ein Clipelement auf den sich durch das Durchgangsloch hindurch erstreckenden Abschnitt aufgeclipst wird, wobei das Clipelement das Durchgangsloch überkragt und dadurch den ersetzenden Abschnitt formschlüssig und/oder kraftschlüssig mit dem verbliebenen Teil des Kunststoffbauteils verbindet.

Wenngleich die Erfindung lediglich im Zusammenhang mit einem Verbindungselement beschrieben worden ist, versteht es sich, dass das ersetzende Bauteil auch über mehrere in gleicher oder ähnlicher Weise mit dem Kunststoffbauteil verbundene Verbindungselemente verbunden werden kann.

Nach einer Weiterbildung der Erfindung wird der ersetzende Abschnitt mit dem verbliebenen Teil des Kunststoffbauteils verklebt. Es kann vorgesehen sein, dass der ersetzende Abschnitt den verbliebenen Teil des Kunststoffbauteils zumindest ein Stück weit überkragt, wobei zwischen den ersetzenden Abschnitt und den verbliebenen Teil des Kunststoffbauteils ein Kleber eingebracht wird, durch den der ersetzende Abschnitt mit dem verbliebenen Teil des Kunststoffbauteils verklebt wird.

Prinzipiell könnte der ersetzende Abschnitt ausschließlich über ein bzw. mehrere Verbindungselemente und ggf. ein jeweils darauf aufgeclipstes Clipelement mit dem verbliebenen Teil des Kunststoffbauteils verbunden werden. Gerade im Fahrzeugkarosseriebau ist es jedoch wichtig, dass ein zu ersetzender beschädigter Abschnitt so mit dem verbliebenen Teil des Kunststoffbauteils verbunden wird, dass das "reparierte Kunststoffbauteil" möglichst dieselbe Festigkeit aufweist, wie das ursprüngliche Kunststoffbauteil. Somit dürfte in vielen bzw. den meisten Fällen eine Verklebung des ersetzenden Abschnitts mit dem verbliebenen Teil des Kunststoffbauteils erforderlich sein.

Nach einer Weiterbildung der Erfindung weist das Kunststoffbauteil eine physische Markierung, z. B. eine muldenartige Vertiefung, auf bzw. es kann vorgesehen sein, dass an der Stelle des Kunststoffbauteils, an der das Verbindungselement mit dem Kunststoffbauteil verschweißt werden soll, eine derartige physische Markierung hergestellt wird. Die physische Markierung ist dazu vorgesehen, das Verbindungselement in einfacher Weise präzise positionieren zu können.

Nach einer Weiterbildung der Erfindung wird ein Verbindungselement verwendet, das mindestens eine Kugel aufweist oder das durch mindestens eine Kugel gebildet ist. Das Verbindungselement kann beispielsweise eine "Doppelkugel" sein, d. h. durch zwei miteinander verbundene, z. B. zwei miteinander verschweißte Kugeln gebildet sein. Dabei kann zunächst eine der Kugeln auf den verbliebenen Teil des Kunststoffbauteils aufgeschweißt werden. In einem nächsten Schritt kann eine weitere Kugel auf die bereits aufgeschweißte Kugel aufgeschweißt werden. Alternativ dazu kann bereits ein aus zwei oder mehreren Kugeln bestehendes Verbindungselement verwendet und dieses auf den verbliebenen Teil des Kunststoffbauteils aufgeschweißt werden.

Im Folgenden wird die Erfindung im Zusammenhang mit der Zeichnung näher erläutert. Es zeigen:

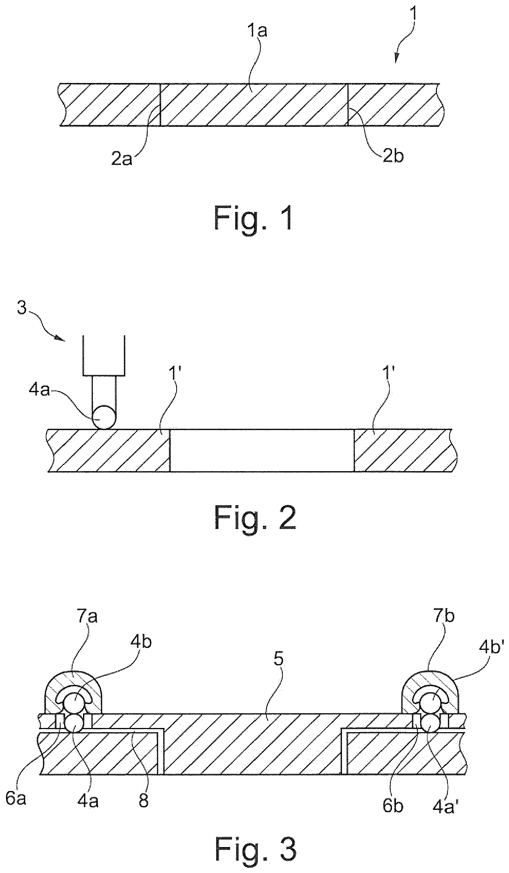

Figur 1 - 3 die einzelnen Schritte zum Austauschen eines Abschnitts eines Kunststoffbauteils.

Figur 1 zeigt eine Kunststoffbauteil 1, bei dem es sich beispielsweise um ein Karosseriebauteil bzw. um ein Karosseriestrukturbauteil eines Fahrzeugs handeln kann. Bereits werksseitig können in bzw, an dem Kunststoffbauteil 1 vordefinierte Trennstellen 2a, 2b vorgesehen sein, an denen das Kunststoffbauteil 1 aufgetrennt werden kann. Das Auftrennen kann beispielsweise durch Schneiden, Sägen oder in anderer Weise erfolgen.

In hier nicht näher dargestellter Weise wird ein zwischen den beiden Trennstellen 2a, 2b befindlicher Abschnitt 1a des Kunststoffbauteils herausgetrennt. Nach dem Heraustrennen verbleibt ein verbliebener Teil 1' des Kunststoffbauteils 1.

Auf den verbliebenen Teil 1' des Kunststoffbauteils 1 wird eine aus Kunststoffmaterial bestehende Kunststoffkugel 4a mittels einer Sonotrode 3 aufgeschweißt. Auf die Kugel 4a wird anschließend eine weitere Kugel 4b aufgeschweißt (vgl. Figur 3). Die beiden Kugeln 4a, 4b bilden eine als "Verbindungselement fungierende" Doppelkugel.

Auf der gegenüberliegenden Seite des verbliebenen Teils 1' des Kunststoffbauteils 1 wird in gleicher Weise eine Doppelkugel 4a', 4b' mittels einer Sonotrode aufgeschweißt.

Anschließend wird ein ersetzender Abschnitt 5 bereitgestellt. Bei dem ersetzenden Abschnitt 5 kann es sich beispielsweise ebenfalls um ein Kunststoffbauteil oder um ein aus einem anderen Material bestehendes Bauteil handeln. Der ersetzende Abschnitt 5 weist zwei Durchgangslöcher 6a, 6b auf.

Der ersetzende Abschnitt 5 wird so angeordnet, dass die durch die beiden Doppelkugeln 4a, 4b bzw. 4a' bzw. 4b' gebildeten Verbindungselemente in bzw. teilweise durch die Durchgangslöcher 6a, 6b ragen. Sofern die beiden Doppelkugeln 4a, 4b bzw. 4a', 4b' ein Übermaß in Bezug auf die Durchgnagslöcher 6a, 6 b aufweisen und das ersetzende Bauteil 5 im Bereich der Durchgangslöcher 6a, 6b eine gewisse Elastizität aufweist, kann das ersetzende Bauteil 5 direkt mit seinen Durchgangslöchern 6a, 6b auf die Doppelkugeln 4a, 4b bzw. 4a', 4b' aufgeklemmt werden.

Wie aus Figur 3 ersichtlich ist, ragen jeweils die oberen Kugeln 4b bzw. 4b' zumindest ein Stück weit aus den Durchgangslöchern 6a, 6b heraus. Alternativ oder ergänzend zu dem oben beschriebenen direkten Aufklemmen kann auf den herausragenden Teil der Verbindungselemente, d. h. auf die oberen Kugeln 4b, 4b' jeweils ein Clipelement 7a bzw. 7b aufgeclipst und der ersetzende Abschnitt auf diese Weise formschlüssig und/oder kraftschlüssig mit dem verbliebenen Teil 1' verbunden werden.

Vor dem Aufsetzen des ersetzenden Abschnitts 5 kann zwischen den ersetzenden Abschnitt 5 und dem verbliebenen Teil des Kunststoffbauteils 1 eine Kleberschicht 8 eingebracht werden, worüber der ersetzende Abschnitt 5 mit dem verbliebenen Teil 1' verklebt wird. Durch die aufgeclipsten Clipelemente 7a, 7b und/oder durch das direkte Aufklemmen des ersetzenden Abschnitts 5 wird sichergestellt, dass der ersetzende Abschnitt 5 hinreichend sicher und fest an dem verbliebenen Abschnitt 1 fixiert wird und somit der Kleber 8 gut aushärten kann.

## Patentansprüche

1. Verfahren zum Austauschen eines Abschnitts (1a), insbesondere eines beschädigten Abschnitts, eines Kunststoffbauteils, **gekennzeichnet durch** folgenden Schritte:
- Heraustrennen des Abschnitts (1a) aus dem Kunststoffbauteil (1),
- Bereitstellen mindestens eines aus einem Kunststoff bestehenden Verbindungselements (4a, 4b),
- Andrücken des mindestens einen Verbindungselements (4a, 4b) an das Kunststoffbauteil (1), derart, dass das mindestens eine Verbindungselement (4a, 4b) an einem verbliebenen Teil (1') des Kunststoffbauteils (1) anliegt,
- in Schwingungen versetzen des Verbindungelements (4a 4b) mittels einer Ultraschallsonotrode und Verschweißen des Verbindungselements (4a, 4b) mit dem verbliebenen Teil (1') des Kunststoffbauteils (1),
- Bereitstellen eines den herausgetrennten Abschnitts (1a) ersetzenden Abschnitts (5), wobei der ersetzende Abschnitt (5) ein Loch, insbesondere ein Durchgangsloch (6a), aufweist,
- Anbringen des ersetzenden Abschnitts (5) in dem Bereich, in dem der herausgetrennte Abschnitt (1a) herausgetrennt worden ist, derart, dass
o der ersetzende Abschnitt (5) mit seinem Loch direkt formschlüssig und/oder kraftschlüssig auf das Verbindungselement (4a, 4b) aufgeklemmt wird und/oder
o sich das Verbindungselement (4a, 4b) zumindest ein Stück weit durch das Durchgangsloch (6a) hindurch erstreckt, wobei ein Clipelement (7a) auf einen sich durch das Loch hindurch erstreckenden Abschnitt des Verbindungselements (4a, 4b) aufgeclipst wird, wobei das Clipelement (7a) das Durchgangsloch (6a) überkragt und den ersetzenden Abschnitt (5) formschlüssig und/oder kraftschlüssig mit dem verbliebenen Teil (1') des Kunststoffbauteils (1) verbindet.

2. Verfahren nach Anspruch 1, **dadurch gekennzeichnet, dass** der ersetzende Abschnitt (5) den verbliebenen Teil (1') des Kunststoffbauteils (1) zumindest ein Stück weit überkragt, wobei zwischen den ersetzenden Abschnitt (5) und den verbliebenen Teil (1') des Kunststoffbauteils (1) ein Kleber (8) eingebracht wird, durch den der ersetzende Abschnitt (5) mit dem verbliebenen Teil (1') des Kunststoffbauteils (1) verklebt wird.

3. Verfahren nach Anspruch 1 oder 2, **dadurch gekennzeichnet, dass** der verbliebene Teil (1') des Kunststoffbauteils (1) eine physische Markierung insbesondere eine muldenartige Vertiefung aufweist oder dass an dem verbliebenen Teil (1') an der Stelle, an der das Verbindungselement (4a, 4b) mit dem verbliebenen Teil (1') verschweißt werden soll, eine derartige physische Markierung hergestellt wird, wobei das Verbindungselement (4a, 4b) mittels der physischen Markierung relativ zu dem verbliebenen Teil (1') positioniert wird.

4. Verfahren nach einem der Ansprüche 1 bis 3, **dadurch gekennzeichnet, dass** das Verbindungselement (4a, 4b) mindestens eine Kugel aufweist oder durch mindestens eine Kugel gebildet ist.

5. Verfahren nach einem der Ansprüche 1 bis 4, **dadurch gekennzeichnet, dass** das Kunststoffbauteil (1) ein faserverstärktes, insbesondere ein durch eingelagerte Kohlefasern und/oder Glasfasern verstärktes Kunststoffbauteil ist.

6. Verfahren nach einem der Ansprüche 1 bis 5, **dadurch gekennzeichnet, dass** das Kunststoffbauteil (1) vordefinierte Trennstellen (2a, 2b) aufweist und genau an den vordefinierten Trennstellen (2a, 2b) aufgetrennt wird.

7. Verfahren nach einem der Ansprüche 1 bis 6, **dadurch gekennzeichnet, dass** das Kunststoffbauteil (1) ein Karosseriebauteil eines Fahrzeugs ist.

8. Verfahren nach einem der Ansprüche 1 bis 7, **dadurch gekennzeichnet, dass** das Verbindungselement (4a, 4b) zumindest in dem Bereich, in dem es mit den verbliebenen Teil (1') verschweißt wird, aus einem thermoplastischen Kunststoffmaterial besteht.

9. Verfahren nach einem der Ansprüche 1 bis 8, **dadurch gekennzeichnet, dass** das Kunststoffbauteil (1) zumindest in dem Bereich des verbliebenen Teils (1'), in dem es mit dem Verbindungselement (4a, 4b) verschweißt wird, aus einem thermoplastischen Kunststoffmaterial besteht.

10. Verfahren nach einem der Ansprüche 1 bis 9, **dadurch gekennzeichnet, dass** das Verbindungselement mittels der Ultraschallsonotrode in translatorische Schwingungen versetzt wird.

11. Verfahren nach einem der Ansprüche 1 bis 10, **dadurch gekennzeichnet, dass** das Verbindungselement (4a, 4b) mittels der Ultraschallsonotrode in Drehschwingungen versetzt werden.

## Claims

1. A method for exchanging a portion (1a), more especially a damaged portion, of a plastic component, **characterised by** the following steps:
- separating the portion (1a) from the plastic component (1),
- providing at least one connection element (4a, 4b) made from a plastic,
- pressing the at least one connection element (4a, 4b) against the plastic component (1) such that the at least one connection element (4a, 4b) comes to bear against a remaining part (1') of the plastic component (1),
- causing the connection element (4a, 4b) to vibrate by means of an ultrasonic sonotrode and welding the connection element (4a, 4b) to the remaining part (1') of the plastic component (1),
- providing a portion (5) that replaces the separated portion (1a), wherein the replacing portion (5) has a hole, more especially a through-hole (6a),
- mounting the replacing portion (5) in the region from which the separated portion (1a) was separated, in such a way that
∘ the replacing portion (5) is clamped by means of its hole directly onto the connection element (4a, 4b) with a form and/or force fit, and/or
∘ the connection element(4a, 4b) extends by at leasta defined amount through the through-hole (6a), wherein a clip element (7a) is clipped onto a portion of the connection element (4a, 4b) that extends through the hole, wherein the clip element (7a) projects above the through-hole (6a) and connects the replacing portion (5) to the remaining part(1') of the plastic component(1) with a form fit and/or force fit.

2. A method according to claim 1, **characterised in that** the replacing portion (5) projects beyond the remaining part (1') of the plastic component (1) by at least a defined amount, wherein an adhesive (8) is inserted between the replacing portion (5) and the remaining part (1') of the plastic component (1) and is used to bond the replacing portion (5) to the remaining part (1') of the plastic component (1).

3. A method according to claim 1 or 2, **characterised in that** the remaining part (1') of the plastic component (1) has a physical mark, more especially a hollow recess, or **in that** a mark of this kind is formed on the remaining part (1') at the pointatwhich the connection element (4a, 4b) is to be welded to the remaining part (1'), wherein the connection element (4a, 4b) is positioned relative to the remaining part (1') by means of the physical mark.

4. A method according to any one of claims 1 to 3, **characterised in that** the connection element (4a, 4b) comprises at least one ball or is formed by at least one ball.

5. A method according to any one of claims 1 to 4, **characterised in that** the plastic component (1) is a fibre-reinforced plastic component, more especially a plastic component reinforced by embedded carbon fibres and/or glass fibres.

6. A method according to any one of claims 1 to 5, **characterised in that** the plastic component (1) has predefined severing points (2a, 2b) and is separated precisely at the predefined severing points (2a, 2b).

7. A method according to any one of claims 1 to 6, **characterised in that** the plastic component(1) is a bodywork component of a vehicle.

8. A method according to any one of claims 1 to 7, **characterised in that** the connection element (4a, 4b) is made from a thermoplastic material at least in the region in which it is welded to the remaining part (1').

9. A method according to any one of claims 1 to 8, **characterised in that** the plastic component (1) is made from a thermoplastic material at least in the region of the remaining part(1') in which it is welded to the connection element (4a, 4b).

10. A method according to any one of claims 1 to 9, **characterised in that** the connection element is made to vibrate in a translational motion by means of the ultrasonic sonotrode.

11. A method according to any one of claims 1 to 10, **characterised in that** the connection element (4a, 4b) is made to vibrate in a rotary motion by means of the ultrasonic sonotrode.

## Revendications

1. Procédé mettant l'échange d'un segment (1a) en particulier d'un segment endommagé d'une pièce en matériau synthétique **caractérisé par** les étapes suivantes consistant à :
- séparer le segment (1a) de la pièce en matériau synthétique (1),
- préparer au moins un élément de liaison (4a, 4b), en un matériau synthétique,
- presser l'élément de liaison (4a, 4b) contre la pièce en matériau synthétique (1), de sorte que cet élément de liaison (4a, 4b) s'applique sur la partie restante (1') de la pièce en matériau synthétique (1),
- faire vibrer l'élément de liaison (4a, 4b) au moyen d'une sonotrode ultrasonique et souder l'élément de liaison (4a, 4b) à la partie restante (1') de la pièce en matériau synthétique (1),
- préparer un segment (5) remplaçant le segment (1a) séparé, le segment de remplacement (5) comportant un perçage, en particulier un perçage traversant (6a),
- mettre en place le segment de remplacement (5) dans la zone dans laquelle le segment séparé (1a) a été séparé de sorte :
o que le segment de remplacement (5) soit directement serré sur l'élément de liaison (4a, 4b) par son perçage par une liaison par la force et/ou par une liaison par le forme, et/ou
o que l'élément de liaison (4a, 4b) pénètre au moins dans une certaine mesure au travers du perçage traversant (6a), un élément de clipsage (7a) étant clipsé sur un segment de l'élément de liaison (4a, 4b) s'étendant au travers du perçage, de l'élément de clipsage (7a) chevauchant le perçage traversant (6a) et reliant le segment de remplacement (5) par une liaison par la forme et/ou par une liaison par la force avec la partie restante (1') de la pièce en matériau synthétique (1).

2. Procédé conforme à la revendication 1,
**caractérisé en ce que**
le segment de remplacement (5) chevauche au moins dans une certaine mesure la partie restante (1') de la pièce en matériau synthétique (1), et, entre le segment de remplacement (5) et la partie restante (1') de la pièce en matériau synthétique (1) est appliqué un adhésif (8) par lequel le segment de remplacement (5) est collé à la partie restante (1') de la pièce en matériau synthétique (1).

3. Procédé conforme à la revendication 1 ou 2,
**caractérisé en ce que**
la partie restante (1') de la pièce en matériau synthétique (1) comporte un marquage physique, en particulier un renfoncement en forme d'auge, ou un tel marquage physique est réalisé, sur la partie restante (1'), au niveau de l'emplacement sur lequel l'élément de liaison (4a, 4b) doit être soudé à cette partie restante (1'), l'élément de liaison (4a, 4b) étant positionné par rapport à la partie restante (1') au moyen du marquage physique.

4. Procédé conforme à l'une des revendications 1 à 3,
**caractérisé en ce que**
l'élément de liaison (4a, 4b) comporte au moins une sphère ou est formé par au moins une sphère.

5. Procédé conforme à l'une des revendications 1 à 4,
**caractérisé en ce que**
la pièce en matériau synthétique (1) est une pièce en matériau synthétique renforcée par des fibres, en particulier une pièce en matériau synthétique renforcée par des fibres de carbone et/ou des fibres de verre incorporées.

6. Procédé conforme à l'une des revendications 1 à 5,
**caractérisé en ce que**
la pièce en matériau synthétique (1) comporte des emplacements de séparation (2a, 2b) prédéfinis, et est exactement séparée au niveau de ces emplacements de séparation (2a, 2b) prédéfinis.

7. Procédé conforme à l'une des revendications 1 à 6,
**caractérisé en ce que**
la pièce en matériau synthétique (1) est une pièce de carrosserie de véhicule.

8. Procédé conforme à l'une des revendications 1 à 7,
**caractérisé en ce que**
l'élément de liaison (4a, 4b) est réalisée en un matériau synthétique thermoplastique au moins dans la zone dans laquelle il est soudé à la partie restante (1').

9. Procédé conforme à l'une des revendications 1 à 8,
**caractérisé en ce que**
la pièce en matériau synthétique (1) est réalisée en un matériau synthétique thermoplastique au moins dans la zone de la partie restante (1') dans laquelle elle est soudée avec l'élément de liaison (4a, 4b).

10. Procédé conforme à l'une des revendications 1 à 9,
**caractérisé en ce que**
l'élément de liaison est mis en vibrations de translation au moyen de la sonotrode ultrasonique.

11. Procédé conforme à l'une des revendications 1 à 10,
**caractérisé en ce que**
l'élément de liaison (4a, 4b) est mis en vibrations rotatives au moyen de la sonotrode ultrasonique.
